# DEMANDE DE BREVET EUROPEEN

(11) **EP 2 123 152 A1**
(43) Date de publication de la demande: **25.11.2009**
(21) Numéro de dépôt: 09305408.8
(22) Date de dépôt: 07.05.2009
(51) Int. Cl.: A01K 39/06

(54) **Dispositif modulaire de cages de gavage de palmipèdes**

(30) Priorité: 09.05.2008 FR 0853059
(71) Demandeur: Lafitte, 40500 Montaut (FR)
(72) Inventeur: Tachon, Raymond, 40700, Monsegur (FR); Rabouan, Philippe, 40500, Montsoue (FR)
(74) Mandataire: Fantin, Laurent

(57) **Abrégé**

L'objet de l'invention est un dispositif modulaire de cages de gavage de palmipèdes du type comprenant au moins un module avec deux cages, chaque cage comprenant deux parois (22) latérales, une façade (24) avant mobile, un fond (26) et une paroi (20) arrière, **caractérisé en ce que** les parois (22) latérales comportent au moins un côté (34) incliné.

## Description

La présente invention concerne un dispositif modulaire de cages de gavage de palmipèdes tels que des canards.

On connaît la technique de gavage de palmipèdes comme les canards qui consiste à les nourrir en surabondance en vue de produire des foies dits gras qui sont la matière de base de recettes gastronomiques fortement appréciées des consommateurs.

Néanmoins, il est difficile d'imaginer les contraintes liées au gavage de ces palmipèdes durant la phase postérieure à l'élevage. En effet, les palmipèdes sont élevés en plein air et ne subissent la phase de gavage que pendant une courte période de l'ordre de 15 jours avant abattage.

Les difficultés sont importantes pour le gaveur et elles le sont tellement que le nombre de gaveurs diminue et que les vocations se raréfient au point d'engendrer une situation critique de pénurie.

Aussi, il convient de faciliter la tâche des gaveurs durant cette période de gavage, car les lots se succèdent et le gavage est de 2 fois par jour pour les canards jusqu'à 4 fois par jour pour les oies.

On note aussi que les palmipèdes eux-mêmes doivent se trouver dans des conditions adaptées pour d'une part ne pas subir un stress préjudiciable à la qualité du foie obtenu et pour éviter la mortalité liée à une mise en oeuvre dégradée des conditions de gavage.

De plus, des normes définissent les conditions de gavage et notamment les conditions de confinement acceptables pour les palmipèdes.

Les palmipèdes sont généralement placés par lots dans un parc de gavage comprenant des modules de cages alignés en rangées et séparés par des allées de circulation.

On définit pour la suite de description par "module" un ensemble de deux "cages" positionnées dos à dos, donnant chacune sur une allée et dont l'intérieur de la cage est accessible depuis cette allée.

Chaque cage de l'art antérieur est sensiblement cubique et comprend une cloison arrière de séparation, une cloison latérale droite, une cloison latérale gauche, une façade avant et un fond.

On a noté de nombreuses contraintes physiques pour le gaveur durant les opérations de gavage.

Les contraintes sont exposées ci-après dans l'ordre logique et chronologique de travail sans pour cela que l'on puisse y voir un degré d'importance.

Pour démarrer un lot, une fois les palmipèdes attrapés en plein air, le gaveur doit les placer dans les cages des modules, à plusieurs dans une cage, 3 ou 4 pour donner un ordre d'idées. Pour cela, on ouvre généralement la façade avant de la cage concernée. Or les palmipèdes sont très vifs et ont tendance à s'échapper si rien ne les retient si bien que les premiers introduits peuvent s'échapper alors que les suivants sont introduits. Une autre solution consiste à les faire passer par-dessus la façade avant mais alors l'effort et le mouvement pour le gaveur restent pénibles lorsqu'ils sont effectués de très nombreuses fois successivement. Ceci est un premier problème.

Le gavage s'effectue au moyen d'une gaveuse qui comprend au moins une unité centrale motorisée qui assure la distribution et la poussée de l'aliment et une tête de gavage prévue pour être introduite dans le bec et le jabot, connectée à l'unité centrale. Cette unité centrale est soit sur roues et déplacée manuellement dans chaque allée, soit suspendue tandis que le gaveur manipule la tête de gavage et son raccord à l'unité centrale.

De fait, le gaveur est obligé de gaver les palmipèdes dans une cage d'un module puis de retirer vers l'allée ladite tête de gavage et la ramener vers la cage juxtaposée du module suivant afin de gaver les palmipèdes de cette cage.

Ces mouvements répétitifs conduisent à des maux physiques chez les gaveurs.

Il faut aussi que le gaveur puisse disposer du palmipède sous la main sans avoir à se pencher vers le fond de la cage pour l'attraper, le maintenir et introduire la tête de gavage dans son bec.

Durant le gavage lui-même de chaque palmipède, il faut que le gaveur soit dans une position ergonomique c'est-à-dire en position debout, sans se pencher ou au moins très faiblement, en disposant si possible d'un appui contre les modules. De plus, durant cette phase de nourrissage le volatile doit de préférence être confiné étroitement pour éviter qu'il ne s'agite et ne batte des ailes.

Bien entendu, il est nécessaire également que la cage et donc le palmipède soient à une hauteur ne nécessitant pas de positionnement non ergonomique du gaveur. Il existe de notables différences de tailles lorsque le gaveur est une femme de petite taille ou un homme de grande taille or chaque volatile doit se trouver placé à la hauteur adéquate.

Chaque cage doit pouvoir être nettoyée dans les meilleures conditions, à savoir, que les déjections doivent pouvoir être nettoyées de façon optimale, rapidement, sans laisser de dépôts dans certaines encoignures.

Il existe dans toutes les installations des caniveaux d'évacuation des déjections, ménagés au droit du plan médian de chaque module, suivant l'axe longitudinal de chaque rangée. Néanmoins, il apparaît nécessaire de gérer les déjections issues de chaque cage.

Concernant les palmipèdes et leur conditions de maintien en cage, il est nécessaire de pouvoir leur offrir le volume nécessaire et légalement imposé tout en permettant un confinement étroit, temporaire, durant chaque phase de gavage.

Il faut aussi leur offrir de l'eau en permanence et éviter que chaque palmipède ne vienne souiller cet apport d'eau.

Cet apport d'eau n'est pas suffisant et même si le gavage est évité pendant les périodes chaudes, il faut refroidir les palmipèdes qui sont nourris en surabondance et dont le métabolisme modifié conduit à une montée de la température corporelle.

Une première voie couramment utilisée est un courant d'air généré par des ventilateurs. Le problème est que ces ventilateurs sont placés au-dessus des cages et inclinés. Tout d'abord ils sont en saillie et perturbent les manoeuvres et surtout ils sont relativement peu efficaces ou du moins présentent une efficacité sans homogénéité. En conséquence, la cage sous le ventilateur est surventilée et la ou les cages suivantes sont sous ventilées. Une solution non satisfaisante consiste à augmenter le nombre de ventilateurs donc notamment les coûts, les nuisances sonores, l'entretien et la consommation électrique. Les cages existantes présentant un grand nombre de barreaux sont peu perméables aux flux d'air ainsi générés d'où une répartition encore plus inefficace.

Du fait de cette ventilation inefficace des agencements actuels, les palmipèdes ont tendance à venir dans les abreuvoirs pour s'éclabousser d'eau afin de se rafraîchir polluant ainsi d'autant plus l'eau destinée à leur consommation.

Les installations actuelles nécessitent l'intervention d'un installateur pour la pose des modules et la mise en service, d'où un coût relativement élevé préjudiciable au rendement.

Le coût de chaque module et donc d'un parc est également relativement élevé par la quantité de matière première utilisée, par le grand nombre de pièces nécessaires et par la variété des pièces nécessaires.

De plus, le temps de travail cumulé du gaveur est important pour gaver un lot.

En effet, la durée de gavage par volatil est importante si l'on compte :
- la mise en cage,
- les phases de gavage à chaque session : ramener chaque palmipède et le confiner serré, le saisir, le gaver, le relâcher,
- la durée de nettoyage du parc, et
- la collecte des volatils gavés.

De ce fait le rendement est insuffisant pour une qualité de gavage donnée de type traditionnel.

Aussi la présente invention propose un dispositif qui pallie les inconvénients précités, qui favorise le rendement pour une qualité égale, qui diminue la pénibilité du travail du gaveur et qui est d'un coût réduit tant à l'investissement qu'a l'usage.

Le dispositif est maintenant décrit en détail suivant un mode principal de réalisation, optimisé, cette description étant établie en regard des dessins annexés, dessins sur lesquels les différentes figures représentent :
- figure 1 : une vue en perspective du dispositif modulaire selon l' invention comprenant un ensemble de trois modules de deux cages,
- figure 2 : une vue de détail schématique d'une cage d'un module,
- figures 3A à 3D : une vue d'un synoptique de fonctionnement de la façade avant pour le chargement initial de ladite cage en volatiles,
- figures 4A à 4D : une vue d'un synoptique de fonctionnement d'un module de deux cages pour la phase de gavage,
- figure 5 : une vue du fond de cage du dispositif selon l'invention,
- figure 6 : une vue de la circulation d'air du dispositif selon l'invention,
- figure 7 : une vue en perspective de l'abreuvoir du dispositif selon l'invention, et
- figure 8 : une vue en perspective des accessoires de finition et de confort du dispositif selon l'invention.

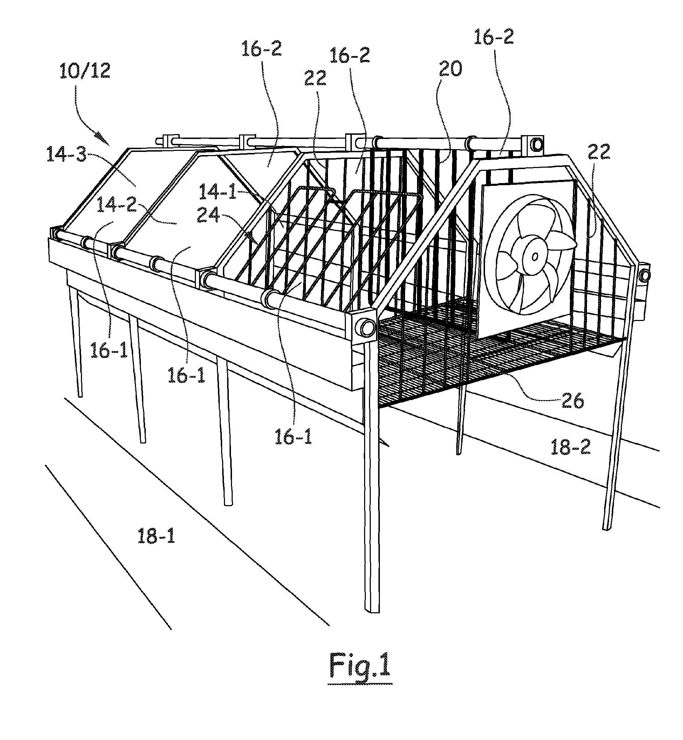

Sur la figure 1, on a représenté un dispositif modulaire selon la présente invention qui comprend un parc 10 comprenant une rangée 12 avec trois modules 14-1 à 14-3 de deux cages 16-1, 16-2 chacun, soit un total de six cages. Ceci n'est bien sûr pas limitatif mais représentatif d'une partie d'installation pouvant être reproduite autant que nécessaire.

De part et d'autre de la rangée 12, il est prévu une allée 18-1 et 18-2 de circulation.

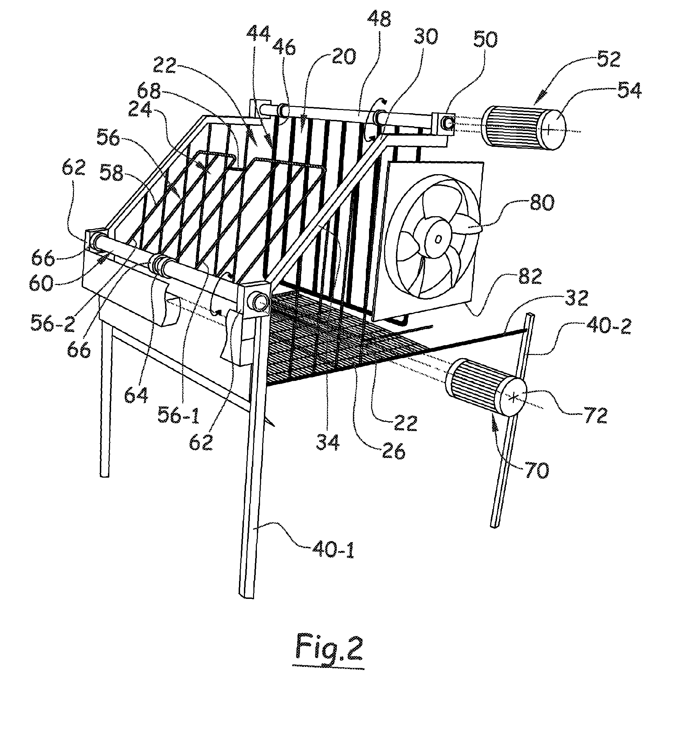

Comme montré sur la figure 1 mais plus en détail sur la figure 2, chaque cage 16 est délimitée par une cloison 20 arrière commune, mobile.

Chaque cage est délimitée également par deux parois 22 latérales communes pour deux cages juxtaposées, sauf aux extrémités de chaque rangée.

Une façade 24 avant assure la fermeture du volume V de confinement de chaque cage.

De façon nécessaire, un fond 26 est prévu pour recevoir les palmipèdes P. Chaque paroi 22 latérale comporte au moins une partie 28 inclinée. Chaque paroi 22 latérale d'un module présente donc en partie supérieure une forme de trapèze avec une petite base 30, une grande base 32, et deux côtés 34.

Dans le mode de réalisation préférentiel, chaque côté comporte de plus un pan 36 vertical, correspondant à une troncature de chaque angle délimité par la grande base et chacun des deux côtés inclinés.

Chaque paroi 22 latérale comprend un cadre constitué de portions de cornières mécano-soudées et des barreaux 38 constitués de fils métalliques également soudés et interposés entre les côtés de ce cadre. On note que le diamètre de ces fils est de l'ordre de 8mm de façon à rendre les barreaux suffisamment rigides pour éviter toute déformation sous l'action des volatils et pour apporter la rigidité suffisante à l'ensemble tout en limitant l'effet barrière à la circulation de l'air comme il sera décrit plus avant.

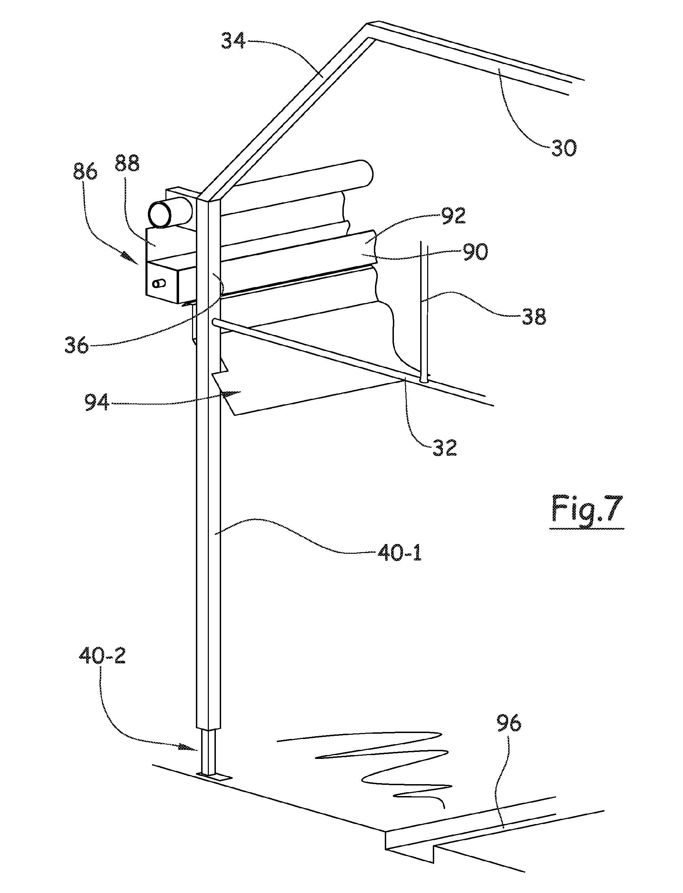

Chaque paroi 22 est supportée par deux pieds 40-1 et 40-2 dont chaque extrémité inférieure est munie de moyens 42-1 et 42-2 de réglage en hauteur, voir sur la figure 7 pour les détails.

La cloison 20 arrière commune, mobile comprend une grille 44 réalisée à partir de fils 46 métalliques, avantageusement du même type que ceux utilisés pour les parois 22 latérales.

Cette grille 44 est solidaire d'un arbre 48 moteur supérieur longitudinal disposé dans le plan médian de la rangée 12, au milieu de la petite base 30 de chaque cloison 22 transversale. La solidarisation en rotation est avantageusement obtenue par des bagues soudées à la grille 44 et par exemple munies de vis pointeau, radiales, qui bloquent sur ledit arbre 48.

Cet arbre 48 supérieur longitudinal tourne dans des paliers 50 et est entraîné en rotation par des moyens moteurs 52, par exemple un moteur 54 électrique.

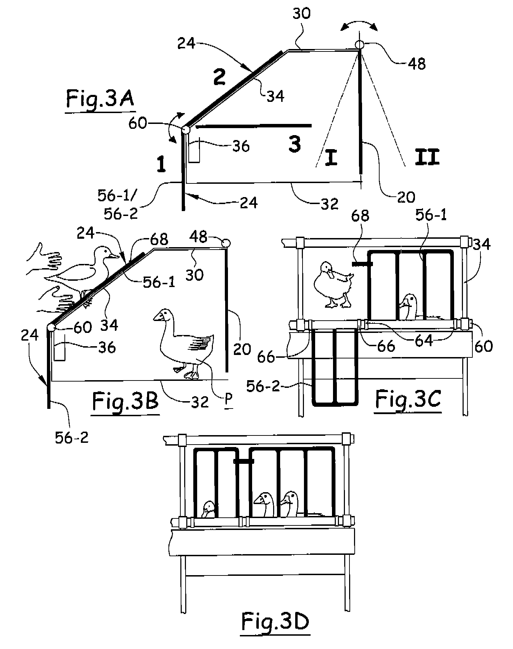

Cet arbre, en position normale verticale, médiane, peut basculer en rotation alternativement d'un côté et de l'autre, positions I et II, comme représenté schématiquement sur la figure 3A, entraînant la grille 44 qui en est solidaire, sous l'action commandée des moyens moteur.

La façade 24 avant comprend également une grille 56. Cette grille est réalisée à partir de fils 58 métalliques comme tous les autres éléments précités dans un but d'homogénéité de fabrication. Cette façade comporte en réalité une première grille 56-1 solidaire d'un arbre 60 moteur latéral longitudinal, parallèle à l'arbre 48 moteur supérieur longitudinal, disposé sensiblement au droit de l'angle du côté 34, incliné, avec le pan 36 vertical.

Cet arbre 60 moteur tourne dans des paliers 62.

La première grille 56-1 comprend des bagues 64 soudées qui sont immobilisées sur l'arbre par exemple au moyen de vis pointeau, radiales, qui bloquent sur ledit arbre 60.

Cette façade 24 avant comprend également une seconde grille 56-2, montée sur le même arbre 60, par exemple avec des bagues 66, mais libre en rotation par rapport audit arbre et donc par rapport à la première grille.

Il est en outre prévu des moyens 68 de liaison amovible de cette seconde grille avec la première grille. Dans ce cas, tout mouvement de l'une des grilles entraîne l'autre. En l'occurrence tout mouvement de l'arbre 60 entraînant la première grille 56-1 entraîne l'autre grille 56-2.

Cet arbre 60 est entraîné par des moyens 70 moteur, par exemple un moteur électrique 72.

La façade 24 avant, telle qu'elle est aménagée peut prendre diverses positions principales et utiles.

La façade 24 avant peut être basculée vers l'avant intégralement, les deux grilles 56-1 et 56-2 étant liées par les moyens 68, position 1 sur la figure 3A.

La façade 24 avant peut être basculée vers l'intérieur, avec son plan parallèle à celui des côtés 34 inclinés des façades 22 latérales, les deux grilles 56-1 et 56-2 étant liées par les moyens 68, position 2 sur la figure 3A.

La façade 24 avant peut être basculée vers l' intérieur, en position horizontale, les deux grilles 56-1 et 56-2 étant liées par les moyens 68, position 3 sur la figure 3A.

Selon un agencement particulier lié au dispositif selon la présente invention, la façade 24 avant peut ne présenter que la seconde grille 56-2 basculée intégralement vers l'avant et la seconde grille 56-2 basculée vers l' intérieur, inclinée et parallèle aux côtés 34 inclinés, position 2. La seconde grille 56-2 est en effet libre en rotation.

Dans ce cas, la seconde grille 56-2 a été libérée des moyens 68 de liaison. Ceci est représenté clairement sur les figures 3B et 3C.

Le fond 26, sur lesquels marchent les palmipèdes, comprend une grille 74 avec un maillage fin pour que les palmipèdes puissent s'y déplacer aisément en trouvant un appui adapté.

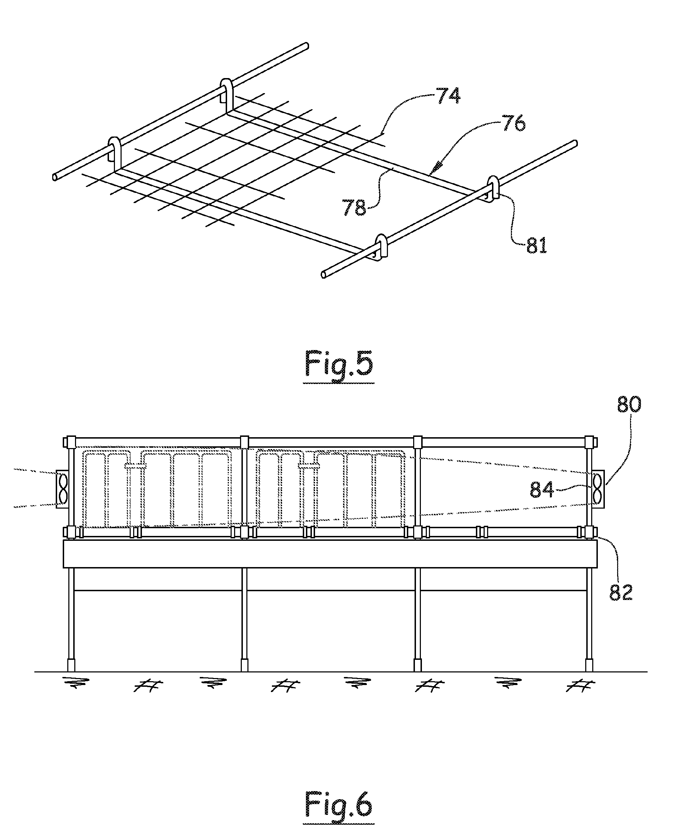

Cette grille 74 repose, en simple appui sur des supports 76. Ces supports sont, selon un mode de réalisation particulièrement avantageux, des barres 78 avec des crochets 81, en U renversé, aux extrémités, voir figure 5.

On peut ainsi régler la position de la grille en profondeur moyennant le changement des jeux de barres 78 qui présenteront des U plus ou moins prononcés. Tout étant amovible et maintenu par simple emboîtement, le montage ne présente pas d'encoignures.

Sur la figure 5, on a représenté des moyens 80 de ventilation qui équipent chaque module. Ces moyens de ventilation sont également bien visibles sur les figures 1 et 2.

Ces moyens 80 de ventilation comportent avantageusement un ventilateur 82 avec moteur intégré, protégé par des grilles 84 de protection. Dans le mode de réalisation retenu et du fait des performances, il a été retenu la présence d'un ventilateur tous les trois modules.

Chaque ventilateur 82 est intégré dans la paroi 22 latérale correspondante, en position centrale.

Ainsi, un ventilateur 82 alimente un module directement et les modules suivants qui sont dans l'alignement, sachant que les barreaux 38 engendrent une faible traînée.

La puissance des ventilateurs peut être réduite car ainsi que représenté sur la figure 6, le flux d'air circule sensiblement à vitesse constante tout le long de la rangée, les ventilateurs successifs reprenant le flux du précédent et lui redonnant la vitesse nécessaire.

Ceci évite de ventiler trop fortement les volatils de proximité et de ne pas ventiler suffisamment les volatils du dernier module soumis à l'action d'un ventilateur.

Les pertes sont également bien moindres d'où une consommation énergétique moindre soit par une diminution de la puissance nécessaire soit par une vitesse réduite de rotation des mêmes équipements.

La figure 7 montre les détails de l'agencement d'un abreuvoir 86 et du pan 36 dont il fait partie intégrante. L'abreuvoir est disposé immédiatement sous la façade avant, plus particulièrement sous l'arbre 60 moteur.

Le pan 36 comprend une plaque 88 de guidage et d'appui qui forme aussi la paroi avant de l'abreuvoir. L'abreuvoir 86 comporte également une plaque 90 de fond et une plaque 92 arrière. Cette plaque arrière 92 est d'une hauteur donnée qui détermine la profondeur d'eau maximale.

Il est prévu des moyens d'alimentation de cet abreuvoir, non représentés, et comprenant notamment une alimentation à flotteur de niveau.

Sous cet abreuvoir, immédiatement au-dessous, mais en laissant un espace de nettoyage, il est prévu un déflecteur 94. Ce déflecteur est orienté vers l'intérieur en direction d'un caniveau 96 généralement ménagé pour l'évacuation des déjections et des eaux de nettoyage.

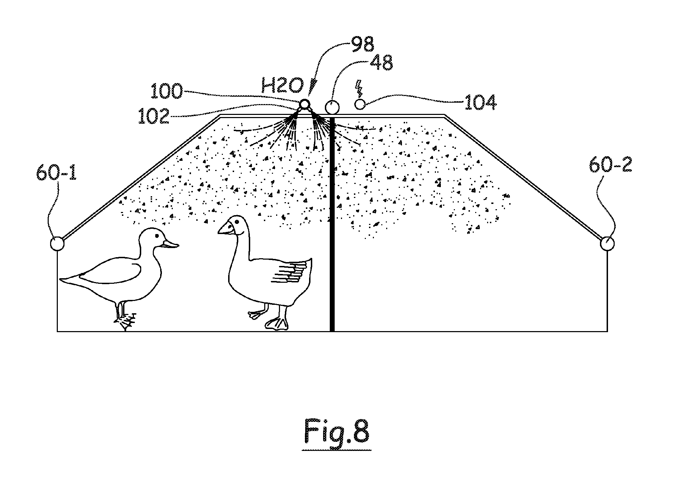

Des accessoires pouvant s'avérer indispensables sont représentés sur la figure 8.

Ainsi, des moyens 98 de brumisation sont ménagés pour refroidir les palmipèdes. Ces moyens de brumisation comprennent une rampe 100 de brumisation équipée de buses 102 travaillant à très haute pression de sorte à générer un brouillard et non des gouttes d'eau qui auraient tendance à mouiller les palmipèdes au lieu de les refroidir.

Il est aussi prévu une rampe 104 électrique afin de faire passer toute la câblerie électrique et d'éviter de rendre accessible tout fil électrique au sein d'un module ou lors du passage d'un module à un autre.

Le dispositif se présente aisément sous forme de kit à monter puisqu'il comprend uniquement des parois 20 de fond, toutes identiques, avec grille et bagues, des parois 22 latérales avec pieds dont certaines munies de réserves pour ventilateurs , des parois 24 avant comprenant des grilles 56-1 avec bagues avec vis pointeau et grilles 56-2 avec bagues sans vis pointeau, des longueurs d'abreuvoirs 86 avec plaque 88 de guidage, des longueurs de déflecteurs 94, des ventilateurs 82 à monter dans les parois transversales correspondantes, des longueurs de rampes 100 de brumisation, des longueurs de rampes 104 électriques, des longueurs d'arbres 42, 60 qui sont avantageusement identiques avec des paliers 50,62 et des moteurs 54,72 qui sont eux aussi avantageusement identiques.

Il suffit de quelques clés de base et d'un niveau à bulle pour assurer un montage rapide de l'ensemble.

Le dispositif modulaire de gavage selon la présente invention est mis en oeuvre par un gaveur comme il est décrit ci-après.

La première phase est celle de l'introduction des palmipèdes dans le parc 10 et donc dans les rangées 12 de modules 14 de cages 16.

Les palmipèdes sont donc collectés et répartis dans chacune des cages. A cet effet le gaveur a positionné les façades 24 avant en position 2, c'est-à-dire inclinées.

La grille 56-2 de chaque façade est ouverte vers l'avant. Le gaveur introduit le nombre de palmipèdes P dans la cage concernée et replace la grille 56-2 en position inclinée en verrouillant cette seconde grille 56-2 à la première grille 56-1 grâce aux moyens 68 de liaison.

Les palmipèdes P introduits sont donc confinés mais avec tout le volume de la cage disponible.

En agissant ainsi toutes les cages sont complétées.

Les abreuvoirs 86 sont alimentés en eau. On note que la profondeur permet aux palmipèdes de tremper le bec suffisamment profondément comme cela est nécessaire. Par contre, on note aussi que la position de l'abreuvoir autorise le passage de la tête et du bec mais interdit au palmipède de grimper sur l'abreuvoir et donc élimine tout risque de déjection dans l'abreuvoir.

De même, le fait que, dans le mode de réalisation préférentiel la façade 24 avant soit inclinée avec sensiblement le même angle d'inclinaison que les côtés 34, permet au gaveur d'atteindre tous les palmipèdes de façon extrêmement aisée sans contorsion particulière, la cage pouvant aisément respecter les volumes et dimensions nécessaires dans le respect de la législation existante et des législations à venir.

A l'heure du gavage, le gaveur déplace la gaveuse dans l'allée 18 lorsqu'elle est sur roues. On constate que les plaques 88 de guidage et d'appui assurent le guidage de ladite gaveuse lors de ses déplacements dans l'allée et permet au gaveur de prendre appui au niveau de la hanche pour assurer sa stabilité pendant cette phase de gavage devant chaque cage.

Lorsque la gaveuse est suspendue, la plaque 88 sert essentiellement d'appui et de protection du gaveur puisque la gaveuse est suspendue.

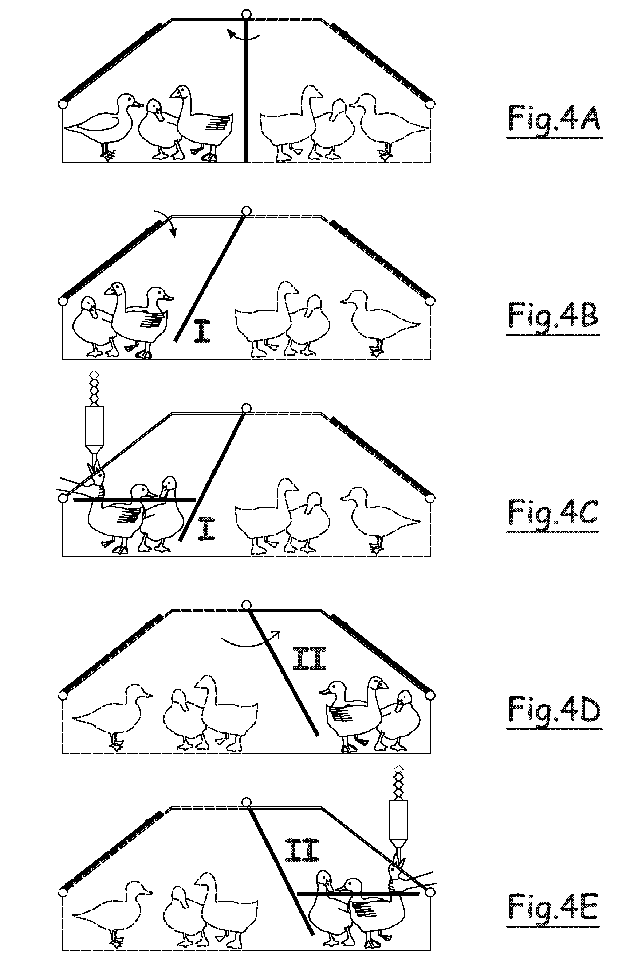

Pour la phase de gavage proprement dite, le gaveur prépare sa rangée en commandant les moyens 52 moteur pour que le moteur 54 fasse basculer la cloison 20 arrière commune, mobile pour qu'elle pousse les palmipèdes vers l'avant de la cage, voir figures 4A et 4B.

Ensuite les moyens 70 moteur sont actionnés par le gaveur afin que le moteur 72 fasse basculer la façade 24 avant dans son ensemble, c'est-à-dire les deux grilles 56-1 et 56-2, de la position 2 vers la position 3 horizontale.

Le mouvement étant lent, les palmipèdes ont le temps de passer leur tête, bec et une partie du cou à travers les fils 58 métalliques des grilles 56-1 et 56-2, voir figure 4C. Les palmipèdes sont alors confinés serrés.

Le gaveur peut donc se déplacer de cage en cage dans la rangée correspondante pour gaver chaque palmipède.

Une fois le gavage terminé, la façade 24 avant est ramenée dans la position 2, inclinée, puis la paroi 20 arrière commune mobile est ramenée dans sa position verticale à effet de séparation.

On constate que le gaveur peut passer de cage en cage sans avoir à ramener la tête de gavage vers l'allée et vers le haut pour contourner les parois transversales 22 puisqu'elles sont inclinées, ce qui est très ergonomique et très appréciable pour le gaveur, ces mouvements étant très répétitifs.

De même, le fait que la façade 24 avant soit abaissée permet aussi un travail de gavage particulièrement ergonomique.

Lorsque les cages de la rangée suivantes sont concernées, on constate que la cloison 20 arrière commune mobile assure de nouveau le déplacement des palmipèdes P , le basculement étant assuré de l'autre côté et les moyens 52 moteurs étant sollicités dans le sens inverse avec la même amplitude, voir figure 4D. La façade 24 peut être abaissée comme précédemment, le cycle étant identique.

En fonction de la température et dès les premiers gavages, il convient de ventiler les palmipèdes et les moyens 80 de ventilation sont mis en service si bien que chaque ventilateur 82 assure la circulation de l'air d'une façon très efficace par rapport aux palmipèdes, avec une vitesse de flux présentant une forte homogénéité d'une cage à l'autre, tout au long de la rangée.

A noter à ce sujet que le gaveur n'est pas soumis au flux d'air comme dans les agencements de l'art antérieur, ce qui améliore également le confort.

Dans le cas où les palmipèdes nécessitent d'être rafraîchis en plus d'être ventilés, les moyens 98 de brumisation sont sollicités et la rampe sous très haute pression délivre de l'eau qui, à travers les buses 102, se trouve micronisée et forme un brouillard apte à dissiper les calories du corps des palmipèdes sans pour autant les mouiller.

Le pilotage peut prévoir d'alterner les phases de brumisation et de ventilation en interrompant la ventilation durant la phase de brumisation et en interrompant la brumisation durant la phase de ventilation.

En fin de cycle de gavage, le gaveur doit collecter les palmipèdes ainsi gavés et les transférer au lieu d'abatage généralement.

A cet effet, les palmipèdes ayant été gavés sont moins actifs et plus empattés et ne sont plus mobiles pour franchir un quelconque obstacle.

Le gaveur met en service les moyens 70 moteur d'une rangée 12 de cages afin de faire basculer pour toutes les cages juxtaposées de cette rangée les façades 24 avant dans leur ensemble puisque les deux grilles 56-1 et 56-2 sont liées, de la position 2 vers la position 1, voir figure 3A.

L'ensemble de la cage est accessible. Pour faciliter encore plus le travail, le gaveur peut commander le basculement de la paroi 20 arrière commune mobile pour faire avancer les palmipèdes vers l'avant de la cage.

Les palmipèdes gavés sont aisément collectés.

A la fin de chaque cycle, il est nécessaire pour le gaveur de procéder à un nettoyage complet du parc, sachant qu'il a déjà procédé à des nettoyages intermédiaires.

Ce travail est rapide et facilité du fait de l'absence d'encoignures. Toutes les déjections, tous les restes de repas et autres débris de nourriture ou encore les plumes sont atteints par le jet d'eau sous pression.

Le dispositif selon la présente invention permet là encore un gain substantiel de temps et une qualité accrue du nettoyage.

## Revendications

1. Dispositif modulaire de cages de gavage de palmipèdes du type comprenant au moins un module (14) avec deux cages (16-1, 16-2), chaque cage comprenant deux parois (22) latérales, une façade (24) avant mobile, un fond (26) et une paroi (20) arrière, **caractérisé en ce que** les parois (22) latérales comportent au moins un côté (34) incliné.

2. Dispositif modulaire selon la revendication 1, **caractérisé en ce que** la façade (24) avant est inclinée, dans une de ses positions principales, sensiblement selon le même angle d'inclinaison que le côté (34).

3. Dispositif modulaire selon la revendication 1 ou 2, **caractérisé en ce que** la façade (24) avant comprend deux grilles (56-1, 56-2), la première (56-1) grille étant solidaire en rotation d'un arbre (60) moteur latéral longitudinal et la seconde (56-2) grille étant libre en rotation par rapport à ce même arbre (60) moteur latéral longitudinal.

4. Dispositif modulaire selon la revendication 3, **caractérisé en ce qu'**il comprend des moyens (68) de liaison amovible de la seconde grille (56-2) avec la première grille (56-1).

5. Dispositif modulaire selon l'une quelconque des revendications 1 à 4, **caractérisé en ce que** la façade (24) avant peut prendre au moins trois positions principales la première totalement basculée vers l'avant, la deuxième inclinée comme le côté (34) de chaque cloison transversale et la troisième inclinée vers l'intérieur de la cage, horizontale.

6. Dispositif modulaire selon l'une quelconque des revendications précédentes, **caractérisé en ce que** la paroi (20) arrière est commune à deux cages d'un module, montée basculante par solidarisation à une arbre (48) moteur supérieur longitudinal et est apte à basculer vers l'avant de l'une ou l'autre des deux cages dont ladite paroi (20) assure la séparation.

7. Dispositif modulaire selon l'une quelconque des revendications précédentes, **caractérisé en ce qu'**il comprend des moyens (80) de ventilation comprenant au moins un ventilateur (82) intégré dans la paroi (22) latérale correspondante d'un module, en position centrale de façon à alimenter le premier module (14) directement et les modules (14) suivants qui sont dans l'alignement dans une même rangée (12).

8. Dispositif modulaire selon l'une quelconque des revendications précédentes, **caractérisé en ce qu'**il comprend un abreuvoir (86) disposé au droit de la façade avant, comportant une plaque (88) de guidage et d'appui qui forme aussi la paroi avant de l'abreuvoir, une plaque (90) de fond et une plaque (92) arrière d'une hauteur donnée qui détermine la profondeur d'eau.

9. Dispositif modulaire selon l'une quelconque des revendications précédentes, **caractérisé en ce qu'**il il comprend un déflecteur (94).

10. Dispositif modulaire selon l'une quelconque des revendications précédentes, **caractérisé en ce qu'**il comprend des moyens (98) de brumisation composés d'une rampe (100) de brumisation équipée de buses (102) travaillant à très haute pression.

11. Dispositif modulaire selon l'une quelconque des revendications précédentes, **caractérisé en ce qu'**il comprend une rampe (104) électrique afin de faire passer toute la câblerie électrique.

12. Dispositif modulaire selon l'une quelconque des revendications précédentes, **caractérisé en ce que** chaque paroi (22) est supportée par deux pieds (40-1, 40-2) dont chaque extrémité inférieure est munie de moyens (42-1, 42-2) de réglage en hauteur.
